# FASCICULE DE BREVET EUROPEEN

(11) **EP 2 522 873 B1**
(45) Date de publication et mention de la délivrance du brevet: **04.06.2014**
(21) Numéro de dépôt: 12167556.5
(22) Date de dépôt: 10.05.2012
(51) Int. Cl.: F16D 48/02, F16D 25/08

(54) **Dispositif de commande hydraulique d'un embrayage**
Hydraulische Kupplungssteuerung
Hydraulic actuation device for a clutch

(30) Priorité: 12.05.2011 FR 1154097
(43) Date de publication de la demande: 14.11.2012
(73) Titulaire: Valeo Embrayages, 80009 Amiens Cedex 2 (FR)
(72) Inventeur: Mollier, Christophe, 80090 AMIENS (FR); Erdogan, Semra, 12060 VERDUNO (CN) (IT); Pelletier, Nicolas, 80000 TORINO (TO) (IT)
(74) Mandataire: Tran, Chi-Hai

(56) Documents cités:
- EP-A1- 2 085 634
- EP-A2- 1 447 570
- DE-A1-102007 032 042
- DE-C1- 4 238 991
- FR-A1- 2 655 128

## Description

La présente invention concerne un dispositif de commande hydraulique d'un embrayage, en particulier pour véhicule automobile.

Un véhicule comporte un moteur relié à une boîte de vitesses par l'intermédiaire d'un embrayage, qui peut être actionné à l'aide d'une commande hydraulique, de façon à coupler (embrayage) ou découpler (débrayage) le moteur de la boîte de vitesses.

Un dispositif de commande hydraulique comporte classiquement un maître cylindre commandé par une pédale d'embrayage et relié par une conduite aller à un cylindre récepteur d'actionnement de l'embrayage, et des moyens d'alimentation du maître cylindre en fluide hydraulique. Le maître cylindre est en général alimenté par un réservoir contenant un liquide de frein.

L'actionnement du maître cylindre par pression sur la pédale d'embrayage provoque le déplacement du fluide hydraulique sous pression dans la conduite aller jusqu'au cylindre récepteur qui exerce alors un effort sur une fourchette d'embrayage, actionnant elle-même une butée d'embrayage qui appuie sur des moyens débrayeurs, par exemple à diaphragme, de façon à désaccoupler le moteur de la boîte de vitesses.

Lorsque le conducteur relâche la pédale d'embrayage, le maître cylindre n'exerce plus de pression sur le fluide hydraulique. Le diaphragme de l'embrayage exerce un effort sur la fourchette d'embrayage et donc sur le cylindre récepteur, qui retrouve sa position d'origine en renvoyant le fluide hydraulique vers le maître cylindre.

Un dispositif de commande hydraulique de ce type est par exemple connu du document DE 195 00 998.

Bien qu'un tel dispositif soit globalement étanche, on constate tout de même qu'en fonctionnement, des bulles d'air s'introduisent dans le fluide hydraulique, en général par le cylindre récepteur.

Le maître cylindre est disposé usuellement en un point situé plus haut que le cylindre récepteur, de sorte que les bulles provenant du cylindre récepteur remontent naturellement dans le maître cylindre où elles sont évacuées vers le réservoir de liquide de frein.

Toutefois, en fonction de l'espace disponible pour le montage de la conduite aller et de la position du maître cylindre et du cylindre récepteur, la conduite aller peut présenter un ou plusieurs siphons, c'est-à-dire une partie de conduite dont la forme empêche la remontée naturelle des bulles du cylindre récepteur vers le maître cylindre.

L'air présent dans le cylindre récepteur ou piégé dans le ou les siphons de la conduite aller empêche le bon fonctionnement du dispositif de commande hydraulique.

En effet, lorsqu'un conducteur appuie sur la pédale d'embrayage et actionne de ce fait le maître cylindre, l'air est comprimé et le déplacement du maître cylindre n'est alors transmis que partiellement au cylindre récepteur, ce qui peut empêcher le débrayage et provoquer une panne conduisant à l'immobilisation du véhicule.

Ce phénomène peut être évité si le volume de la partie de conduite correspondant au siphon est inférieur à la moitié du volume de fluide hydraulique déplacé par le maître cylindre.

Le volume déplacé par le maître cylindre est communément de l'ordre de 6000 mm³, ce qui correspond à un siphon d'une longueur inférieure à 370 mm, pour une conduite de diamètre 3,2 mm, ou un siphon d'une longueur inférieure à 180 mm, pour une conduite de diamètre 4,6 mm.

Une telle règle est généralement respectée lorsque le moteur, et donc l'embrayage et le cylindre récepteur, sont placés à l'avant du véhicule. Dans ce cas, la longueur de la conduite est relativement faible entre le maître cylindre et le cylindre récepteur.

Il en va différemment lorsque le moteur est situé à l'arrière. Dans un tel cas, la longueur du siphon sera au minimum de l'ordre de 1500 mm. Il arrive également que la règle précitée ne soit pas respectée lorsque, bien que le moteur soit placé à l'avant, la position du conducteur, et donc de la pédale d'embrayage et du maître cylindre, est à droite du véhicule.

Dans un tel cas, les bulles d'air ne peuvent pas être expulsées par le maître cylindre, ce qui empêche un fonctionnement fiable du dispositif de commande hydraulique et de l'embrayage.

Afin de remédier à cet inconvénient, le document US 2009/0014275 propose de relier le cylindre récepteur au réservoir de fluide hydraulique alimentant le maître cylindre par une conduite retour.

La pression à l'intérieur du réservoir étant faible, la conduite retour doit être équipée d'une pompe et d'une vanne empêchant la circulation de fluide à l'intérieur de la conduite retour lors du débrayage de l'embrayage, c'est-à-dire lorsque le fluide hydraulique circule du maître cylindre vers le cylindre récepteur.

Afin de purger l'air contenu dans le cylindre récepteur, la vanne précitée peut être ouverte de sorte qu'un mélange d'air et de liquide hydraulique soit renvoyé vers le réservoir, à l'aide de la pompe.

Un tel système nécessite de commander une vanne de purge qui doit être étanche. En outre, l'opération de purge doit être réalisée hors de toute période de fonctionnement de l'embrayage.

Le document EP 2085634 divulgue, en relation avec sa figure 6, un dispositif de commande hydraulique comprenant une conduite aller reliant le maître cylindre et le cylindre récepteur, une conduite retour reliant le cylindre récepteur au maître cylindre et des moyens favorisant la circulation du fluide dans le sens du maître cylindre vers le cylindre récepteur dans la conduite aller et dans le sens du cylindre récepteur vers le maître cylindre dans la conduite retour.

De cette manière, lorsque le conducteur appuie sur la pédale d'embrayage, le maître cylindre est actionné, et le fluide hydraulique présent dans chacune des conduites aller et retour est mis sous pression. Le cylindre récepteur est alors actionné.

Lors du débrayage, le fluide hydraulique ainsi que les bulles d'air présentes dans le cylindre récepteur circulent dans la conduite retour en direction du maître cylindre, où les bulles sont évacuées.

Les bulles ne sont donc pas amenées à reculer de l'aval vers l'amont dans une même conduite, comme cela est le cas dans le dispositif de commande hydraulique du document DE 195 00 998.

Les bulles finissent nécessairement par atteindre le maître cylindre, où elles seront évacuées.

Ainsi, les bulles d'air sont évacuées lors du fonctionnement de l'embrayage, et non lors d'une étape de purge distincte, comme cela est le cas dans le document US 2009/0014275. Un tel dispositif ne nécessite en outre pas de vanne étanche à commander ou de pompe de purge.

Toutefois, dans le dispositif de commande hydraulique du document EP 2085634, les bulles d'air ont tendance à être renvoyées de la conduite retour à la conduite aller sans être évacuées par le maître cylindre lors opérations rapprochées d'embrayage et de débrayage.

L'invention a notamment pour but d'apporter une solution simple, efficace et économique à ce problème.

A cet effet, elle propose un dispositif de commande hydraulique d'un embrayage, comportant un maître cylindre commandé par une pédale d'embrayage et relié par une conduite aller à un cylindre récepteur d'actionnement de l'embrayage, et des moyens d'alimentation du maître cylindre en fluide hydraulique, le dispositif de commande comportant une conduite retour reliant le cylindre récepteur au maître cylindre et des moyens favorisant la circulation de fluide dans le sens du maître cylindre vers le cylindre récepteur dans la conduite aller et dans le sens du cylindre récepteur vers le maître cylindre dans la conduite retour, ledit dispositif de commande étant remarquable en ce que l'extrémité amont de la conduite aller est raccordée à une partie inférieure d'une chambre hydraulique reliée au maître cylindre et en ce que l'extrémité aval de la conduite retour est raccordée à une partie supérieure de ladite chambre hydraulique.

La chambre hydraulique permet de collecter des bulles d'air entre des opérations rapprochées d'embrayage et de débrayage, l'air étant ensuite évacué vers le maître cylindre lors d'une phase de repos.

Les positions des extrémités des conduites permettent d'éviter que des bulles d'air présentes dans la chambre soient renvoyées dans la conduite aller.

On entend par chambre hydraulique au sens de la présente invention un espace fermé présentant un volume suffisant pour piéger des bulles d'air sans que celles-ci soient renvoyées dans la conduite aller lors d'opérations d'embrayage débrayage extrêmement rapprochées.

A titre d'exemple, le volume de cette chambre hydraulique est supérieur à 1 ml, de préférence supérieur à 3 ml.

Selon une caractéristique de l'invention, le dispositif comporte une chambre hydraulique reliée au maître cylindre, à l'extrémité amont de la conduite aller et à l'extrémité aval de la conduite retour, respectivement, et un connecteur à trois voies relié au cylindre récepteur, à l'extrémité aval de la conduite aller et à l'extrémité amont de la conduite retour, respectivement.

Préférentiellement, le dispositif comporte des clapets anti-retour autorisant, dans chaque conduite, le passage de fluide de l'amont vers l'aval et empêchant la circulation de fluide dans le sens opposé.

Les clapets anti-retour peuvent être montés dans les conduites ou peuvent être intégrés au connecteur à trois voies, au maître-cylindre et/ou au cylindre récepteur.

En variante, le dispositif comporte une restriction limitant le débit de fluide et générant une perte de charge dans la conduite retour et un clapet anti-retour autorisant le passage de fluide de l'amont vers l'aval dans la conduite aller et empêchant la circulation de fluide dans le sens opposé.

Lorsque le conducteur appuie sur la pédale d'embrayage et que le maître cylindre est actionné, une faible partie du fluide hydraulique sous pression peut alors circuler dans la conduite retour, en direction du cylindre récepteur, la majeure partie du fluide hydraulique circulant dans la conduite aller. Lors du relâchement de la pédale et du retour du cylindre récepteur en position initiale sous l'action du diaphragme de l'embrayage, le fluide hydraulique et les bulles qu'il contient ne peuvent pas circuler dans la conduite aller et circulent nécessairement dans la conduite retour.

Une restriction est moins onéreuse qu'un clapet anti-retour et n'affecte pas le fonctionnement général de l'invention.

Afin de faciliter le retrait des bulles d'air présentes dans le cylindre récepteur, la conduite retour ou le connecteur à trois voies peut être raccordé à une partie supérieure du cylindre récepteur.

De même, la conduite retour peut être raccordée au connecteur à trois voies en un point situé au-dessus du point de raccordement de la conduite aller au connecteur à trois voies.

Ceci permet d'éviter que des bulles restent piégées dans la conduite aller.

Avantageusement, le connecteur est relié au cylindre récepteur par une conduite de liaison, l'extrémité amont de la conduite retour étant située sous le point haut de la conduite de liaison, le volume de fluide entre ledit point haut et ladite extrémité amont étant inférieur au volume du maître cylindre, préférentiellement inférieur à la moitié du volume du maître cylindre.

On garantit ainsi que des bulles présentes dans la conduite de liaison, au point haut, peuvent être emmenées dans la conduite retour, lors des actions successives d'embrayage et de débrayage.

Selon une caractéristique de l'invention, la conduite aller et la conduite retour sont formées dans un corps monobloc, par exemple un corps extrudé en matériau plastique.

L'invention concerne également un véhicule automobile, comportant un embrayage actionné par un dispositif de commande hydraulique du type précité.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue schématique d'un véhicule automobile comportant un embrayage actionné par un dispositif de commande hydraulique de l'art antérieur,
- les figures 2 et 3 sont des vues schématiques d'un dispositif de commande hydraulique, respectivement en phase de débrayage et en phase d'embrayage.
- les figures 4 et 5 représentent les sections de deux variantes d'un corps monobloc dans lequel sont formés les conduites aller et retour,
- les figures 6 à 10 ont des vues schématiques illustrant d'autres formes de réalisation d'un dispositif de commande.

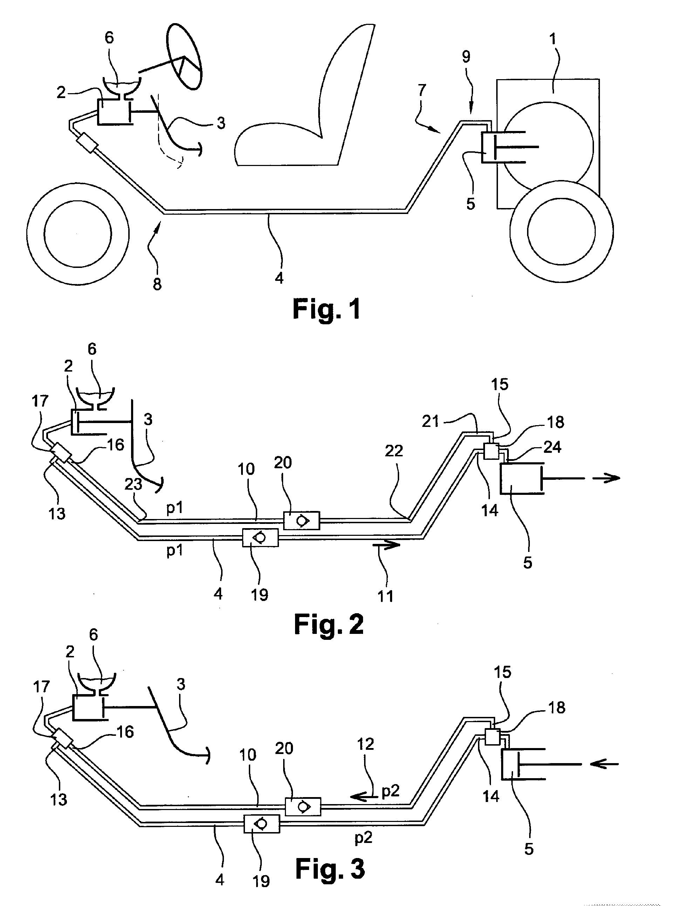

La figure 1 représente un véhicule automobile comportant un moteur 1 situé en partie arrière du véhicule, relié à une boîte de vitesses par l'intermédiaire d'un embrayage (non représentés). L'embrayage est actionné par un dispositif de commande hydraulique comportant à l'avant un maître cylindre 2 commandé par une pédale d'embrayage 3 et relié par une conduite aller 4 à un cylindre récepteur 5 d'actionnement de l'embrayage, à l'arrière. Le maître cylindre 2 est alimenté par un réservoir 6, situé au-dessus du maître cylindre 2 et contenant du liquide de frein à la pression atmosphérique.

Lorsqu'un conducteur appuie sur la pédale d'embrayage 3, le maître cylindre 2 repousse le fluide hydraulique en direction du cylindre récepteur 5 qui, en se déplaçant, actionne une fourchette en liaison avec une butée d'embrayage agissant sur un diaphragme de l'embrayage.

L'effort de poussée transmis au diaphragme entraîne le découplage du moteur 1 par rapport à la boîte de vitesses : il s'agit de l'opération de débrayage.

Lorsque le conducteur souhaite à nouveau embrayer, c'est-à-dire coupler le moteur 1 à la boîte de vitesses, il lui suffit de relâcher la pédale d'embrayage 3, l'effort de rappel exercé par le diaphragme sur le cylindre récepteur 5 tendant alors à repousser le fluide hydraulique en direction du maître cylindre 2, les deux cylindres 2, 5 retrouvant donc leur position d'origine, c'est-à-dire leur position de repos.

L'embrayage est dans ce cas un embrayage normalement fermé, ce qui signifie qu'en l'absence d'action sur la pédale d'embrayage 3, le moteur 1 est couplé à la boîte de vitesses.

Comme indiqué précédemment, des bulles d'air parviennent à pénétrer dans le circuit hydraulique, en particulier au niveau du cylindre récepteur 5. Compte tenu des espaces disponibles pour le passage des conduites, la conduite aller 4 forme généralement un siphon 7 empêchant le retour des bulles du cylindre récepteur 5 vers le maître cylindre 2. Plus particulièrement, le siphon s'étend du point bas 8 de la conduite jusqu'au point haut 9 tourné du côté cylindre récepteur 5. Des bulles d'air piégées dans le siphon 7 ne s'évacueront donc pas naturellement en direction du maître cylindre 2.

La présence de bulles d'air dans le circuit hydraulique empêche le bon fonctionnement de la commande hydraulique, comme cela a été expliqué auparavant.

Un but de l'invention est d'évacuer les bulles hors du circuit hydraulique.

Pour cela dans une première forme de réalisation non revendiquée représentée aux figures 2 et 3, un dispositif de commande hydraulique d'un embrayage comporte, de même que précédemment, un maître cylindre 2 situé à l'avant et commandé par une pédale d'embrayage 3.

Le dispositif de commande comporte en outre une conduite aller 4 et une conduite retour 10 parallèles, dans lesquelles le fluide hydraulique est destiné à circuler dans le sens des flèches 11 et 12. La conduite aller 4 comporte ainsi des extrémités amont 13 et aval 14, la conduite retour 10 comportant des extrémités amont 15 et aval 16.

Un premier connecteur à trois voies 17 est raccordé respectivement au maître cylindre 2, à l'extrémité amont 13 de la conduite aller 4 et à l'extrémité aval 16 de la conduite retour 10. Préférentiellement, le point de raccordement du connecteur trois voies 17 au maître cylindre 2 est plus haut que le point de raccordement dudit connecteur 17 à la branche retour 10, qui lui-même est plus haut que le point de raccordement dudit connecteur 17 à la branche aller 4.

Un second connecteur à trois voies 18 est raccordé respectivement au cylindre récepteur 5, situé à l'arrière à l'extrémité aval 14 de la conduite aller 4 et à l'extrémité amont 15 de la conduire retour 10. Préférentiellement, le connecteur trois voies 18 est raccordé à une partie supérieure du cylindre récepteur 5 et le point de raccordement dudit connecteur 18 à la branche retour 10 est plus haut que le point de raccordement dudit connecteur 18 à la branche aller 4.

La conduite aller 4 comporte un clapet anti-retour 19 autorisant la circulation du fluide hydraulique du maître cylindre 2 vers le cylindre récepteur 5 et empêchant la circulation de fluide dans le sens inverse, et la conduite retour 10 comporte un clapet anti-retour 20 autorisant la circulation de fluide hydraulique du cylindre récepteur 5 vers le maître cylindre 2 et empêchant la circulation de fluide dans le sens inverse.

Le fonctionnement de ce dispositif de commande va maintenant être décrit en détail.

Lors d'une opération de débrayage, le conducteur appuie sur la pédale 3 pour actionner le maître cylindre (figure 2). Le fluide hydraulique contenu dans le maître cylindre 2 est alors poussé en direction du cylindre récepteur 5. Soit p₁ la pression du fluide contenu dans la conduite aller 4. On considère dans ce qui suit que les pertes de charge générées par les clapets anti-retour 19, 20 sont négligeables, pour faciliter le raisonnement. La partie de la conduite retour 10 située entre le connecteur 17 et le clapet anti-retour 20 est également soumise à la pression p₁. Le fluide est empêché de circuler dans la conduite retour 10 par le clapet 20.

Le fluide sous pression actionne le cylindre récepteur 5, la pression nécessaire pour l'actionnement du diaphragme de l'embrayage étant inférieure à la pression p₁.

Ensuite, lorsque le conducteur souhaite à nouveau embrayer, il relâche la pédale 3, de sorte que la pression p₁ n'est plus maintenue dans les conduites 4, 10 par le maître cylindre 2 (figure 3).

L'effort de rappel exercé par le diaphragme repousse le cylindre récepteur 5 dans sa position initiale, de sorte que le fluide hydraulique est repoussé en direction du maître cylindre 2. Soit p₂ la pression à l'intérieur de la conduite retour 10 lors de cette phase. La partie de la conduite aller 4 située entre le clapet anti-retour 19 et le connecteur 18 est également soumise à la pression p₂. Cette pression p₂ est suffisante pour provoquer le retour du maître cylindre 2 en position initiale. Le fluide est empêché de circuler dans la conduite aller 4 par le clapet 19.

Si des bulles sont présentes dans le cylindre récepteur, elles sont aspirées dans la conduite retour 10 lors de la phase d'embrayage (figure 3).

Dans le cas représenté aux figures 2 et 3, la conduite retour 10 comporte, de l'amont vers l'aval, une partie montante, située entre le point de raccordement 15 et un point haut 21 de la conduite (figure 2), une partie descendante située entre le point haut 21 et un point bas 22, une partie sensiblement horizontale, s'étendent du point bas 22 à un autre point bas 23, et une partie montante s'étendant du point bas 23 au point de raccordement 16 entre la conduite retour 10 et le connecteur 17.

Le volume du maître cylindre 2, de l'ordre de 6000 mm³, est supérieur au volume entre le point de raccordement 24 du connecteur 18 au cylindre récepteur 5 et le point de raccordement 15 de la conduite retour 10 au connecteur 18.

Le volume du maître cylindre 2 est également supérieur au volume de la conduite retour 10 entre les points 21 et 22.

Les bulles d'air présentes dans le cylindre récepteur 5 sont nécessairement situées en partie haute, au niveau du point 24.

Lors des opérations successives de d'embrayage, les bulles sont aspirées du cylindre récepteur 5 vers la branche retour 10 et traversent progressivement les différentes parties de la conduite de retour jusqu'à atteindre le maître cylindre 2, d'où elles seront finalement évacuées dans le réservoir 6.

Le volume du maître cylindre 2 et des différentes parties de la conduite retour 10 doit être déterminé de manière à ce que les bulles puissent progresser dans la conduite retour 10 à chaque opération d'embrayage.

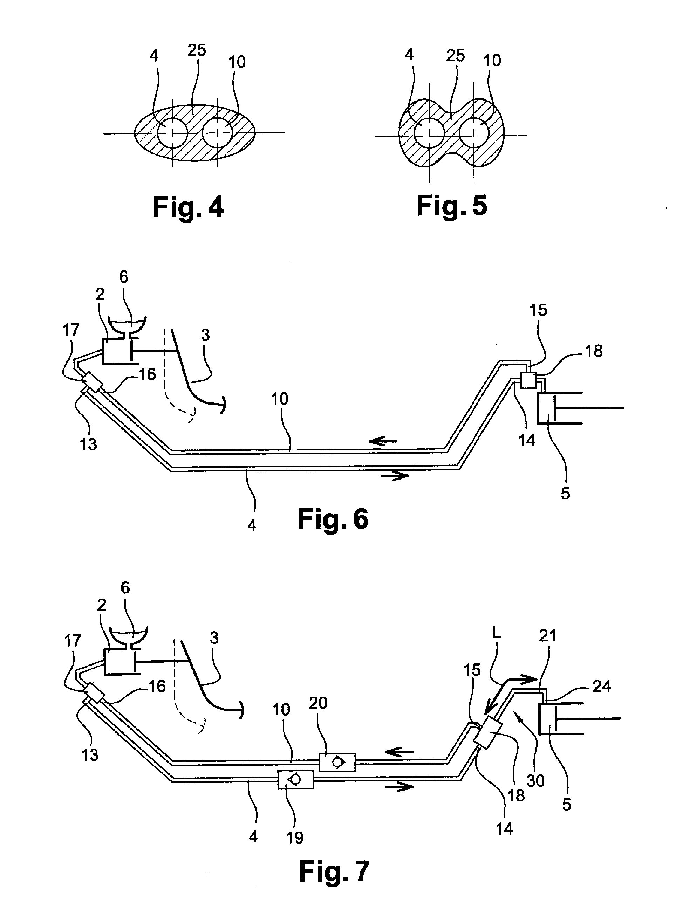

Comme représenté aux figures 4 et 5, la conduite aller 4 et la conduite retour 10 peuvent être formées dans un corps monobloc 25, par exemple un corps extrudé en matériau plastique, tel qu'un polyamide, un polyamide semi aromatique ou un polyimide.

La figure 6 illustre une autre forme de réalisation non revendiquée dans laquelle les clapets anti-retour 19, 20 sont intégrés aux connecteurs à trois voies 17, 18. Soit deux clapets anti-retour sont intégrés à un même connecteur, soit un clapet anti-retour est intégré à chaque connecteur 17, 18. Dans tous les cas, un clapet anti-retour agit sur chacune des conduites 4, 10.

La figure 7 montre une forme de réalisation non revendiquée similaire à celle de la figure 3, dans laquelle le connecteur 18 est relié au cylindre récepteur 5 par une conduite de liaison 30 et est décalé vers le bas de manière à ce que l'extrémité amont 15 de la conduite retour soit distante du point haut 21 de la conduite de liaison 30, d'une longueur L, et située sous ce point haut 21. Le volume de fluide entre le point haut 21 et l'extrémité amont 15 est inférieur au volume du maître cylindre 2, préférentiellement inférieur à la moitié du volume du maître cylindre 2. On garantit ainsi que des bulles présentes dans la conduite de liaison 30 au point haut 21, peuvent être emmenées dans la conduite retour 10, lors des actions successives d'embrayage et de débrayage.

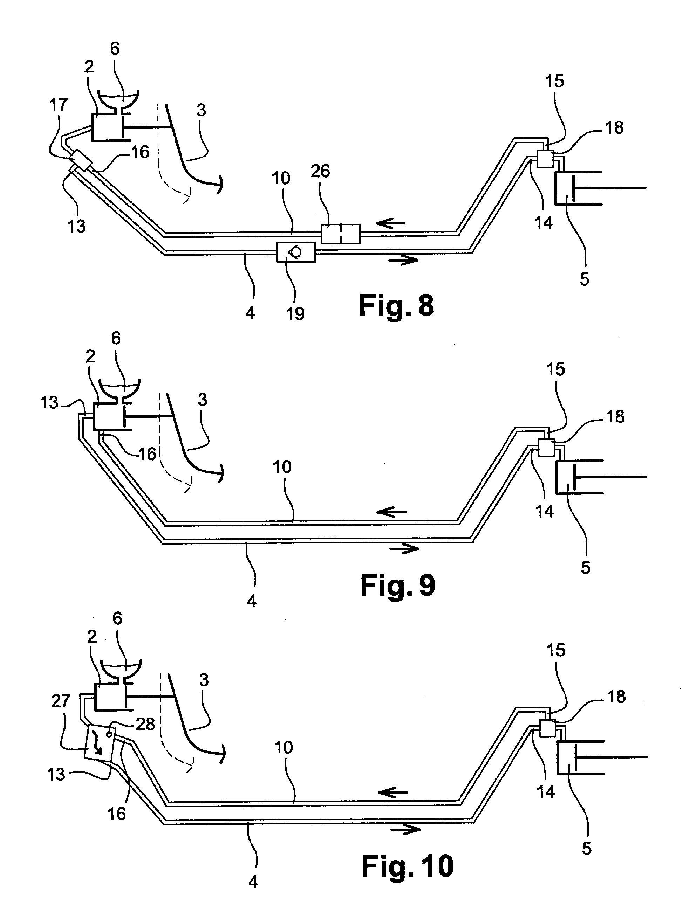

La figure 8 illustre une autre forme de réalisation non revendiquée dans laquelle le clapet anti-retour 20 de la conduite retour 10 a été remplacé par une restriction 26 de la conduite 10, moins onéreuse. La restriction 26 limite le débit de fluide dans la branche retour 10 et génère une perte de charge supérieure à celle du clapet anti-retour 19 de la branche aller 4.

Lors de la phase de débrayage, lorsque le conducteur appuie sur la pédale d'embrayage 3 et que le maître cylindre 2 est actionné, une faible partie du fluide hydraulique sous pression circule dans la conduite retour 10, en direction du cylindre récepteur 5, la majeure partie du fluide hydraulique circulant dans la conduite aller 4. Lors du relâchement de la pédale 3 et du retour du cylindre récepteur 5 en position initiale sous l'action du diaphragme de l'embrayage, le fluide hydraulique et les bulles qu'il contient ne peuvent pas circuler dans la conduite aller 4 et circulent nécessairement dans la conduite retour 10.

En variante, les conduites aller 4 et retour 10 peuvent être raccordées directement au maître cylindre 2 (figure 9) et/ou au cylindre récepteur 5, les clapets-anti-retour 19, 20 et/ou la restriction 26 étant intégrés directement aux cylindres 2, 5 et/ou à un connecteur à trois voies 17, 18.

Selon l'invention, représentée à la figure 10, l'extrémité amont 13 de la conduite aller 4 est raccordée à une partie inférieure d'une chambre hydraulique 27 reliée au maître cylindre 2, l'extrémité aval 16 de la conduite retour 10 étant raccordée à une partie supérieure de ladite chambre hydraulique 27.

La chambre hydraulique permet de collecter des bulles d'air 28 entre des opérations rapprochées d'embrayage et de débrayage, l'air étant ensuite évacuée vers le maître cylindre 2 et le réservoir 6 lors d'une phase de repos.

On notera que l'utilisation d'une chambre hydraulique 27 n'est pas limitée au mode de réalisation spécifique de la figure 10 et une telle chambre hydraulique pourra être utilisée, en combinaison, avec chacun des modes de réalisation des figures 1 à 8, la chambre hydraulique remplaçant alors le connecteur trois voies 17.

L'invention propose ainsi un dispositif de commande hydraulique d'un embrayage permettant l'évacuation des bulles d'air lors de son fonctionnement, de manière simple et efficace.

## Revendications

1. Dispositif de commande hydraulique d'un embrayage, comportant un maître cylindre (2) commandé par une pédale d'embrayage (3) et relié par une conduite aller (4) à un cylindre récepteur (5) d'actionnement de l'embrayage, et des moyens d'alimentation (6) du maître cylindre (2) en fluide hydraulique, le dispositif de commande comportant une conduite retour (10) reliant le cylindre récepteur (5) au maître cylindre (2) et des moyens (19, 20, 26) favorisant la circulation de fluide dans le sens du maître cylindre (2) vers le cylindre récepteur (5) dans la conduite aller (4) et dans le sens du cylindre récepteur (5) vers le maître cylindre (2) dans la conduite retour (10), ledit dispositif de commande étant **caractérisé en ce que** l'extrémité amont (13) de la conduite aller (4) est raccordée à une partie inférieure d'une chambre hydraulique (27) reliée au maître cylindre (2) et **en ce que** l'extrémité aval (16) de la conduite retour (10) est raccordée à une partie supérieure de ladite chambre hydraulique (27).

2. Dispositif selon la revendication 1, **caractérisé en ce qu'**il comporte un connecteur à trois voies (18) relié au cylindre récepteur (5), à l'extrémité aval (14) de la conduite aller (4) et à l'extrémité amont (15) de la conduite retour (10), respectivement.

3. Dispositif selon la revendication 1 ou 2, **caractérisé en ce qu'**il comporte des clapets anti-retour (19, 20) autorisant, dans chaque conduite (4, 10), le passage de fluide de l'amont vers l'aval et empêchant la circulation de fluide dans le sens opposé.

4. Dispositif selon l'ensemble des revendications 2 et 3, **caractérisé en ce que** les clapets anti-retour (19, 20) sont montés dans les conduites (4, 10) ou sont intégrés au connecteur à trois voies (17, 18), au maître-cylindre (2) et/ou au cylindre récepteur (5).

5. Dispositif selon la revendication 1 ou 2, **caractérisé en ce qu'**il comporte une restriction (26) limitant le débit et générant une perte de charge dans la conduite retour (10) et un clapet anti-retour (19) autorisant le passage de fluide de l'amont vers l'aval dans la conduite aller (4) et empêchant la circulation de fluide dans le sens opposé (10).

6. Dispositif selon la revendication 2, **caractérisé en ce que** le connecteur à trois voies (18) est raccordé à une partie supérieure du cylindre récepteur (5).

7. Dispositif selon la revendication 2, **caractérisé en ce que** la conduite retour (10) est raccordée au connecteur à trois voies (18) en un point situé au-dessus du point de raccordement (14) de la conduite aller (4) au connecteur à trois voies (18).

8. Dispositif selon la revendication 2, **caractérisé en ce que** le connecteur (18) est relié au cylindre récepteur (5) par une conduite de liaison (30), l'extrémité amont (15) de la conduite retour (10) étant située sous le point haut (21) de la conduite de liaison (30), le volume de fluide entre ledit point haut (21) et ladite extrémité amont (15) étant inférieur au volume du maître cylindre (2), préférentiellement inférieur à la moitié du voume du maître cylindre.

9. Dispositif selon l'une des revendications 1 à 8, **caractérisé en ce que** la conduite aller (4) et la conduite retour (10) sont formées dans un corps monobloc (25), par exemple un corps extrudé en matériau plastique.

10. Véhicule automobile, comportant un embrayage actionné par un dispositif de commande hydraulique selon l'une des revendications 1 à 9.

## Patentansprüche

1. Vorrichtung zur hydraulischen Steuerung einer Kupplung, umfassend einen Geberzylinder (2), der von einem Kupplungspedal (3) gesteuert und über eine Vorlaufleitung (4) mit einem Nehmerzylinder (5) zur Betätigung der Kupplung verbunden ist, und Mittel (6) zur Versorgung des Geberzylinders (2) mit Hydraulikfluid, wobei die Steuerungs-Vorrichtung eine Rücklaufleitung (10), die den Nehmerzylinder (5) mit dem Geberzylinder (2) verbindet, und Mittel (19, 20, 26) umfasst, welche die Zirkulation des Fluids in der Richtung vom Geberzylinder (2) zum Nehmerzylinder (5) in der Vorlaufleitung (4) und in der Richtung vom Nehmerzylinder (5) zum Geberzylinder (2) in der Rücklaufleitung (10) unterstützen, wobei die Steuerungs-Vorrichtung **dadurch gekennzeichnet ist, dass** das aufwärts gelegene Ende (13) der Vorlaufleitung (4) an einen tiefer gelegenen Teil einer mit dem Geberzylinder (2) verbundenen Hydraulikkammer (27) angeschlossen ist, und dadurch, dass das abwärts gelegene Ende (16) der Rücklaufleitung (10) an einen höher gelegenen Teil der besagten Hydraulikkammer (27) angeschlossen ist.

2. Vorrichtung nach Anspruch 1, **dadurch gekennzeichnet, dass** sie ein Verbindungsstück (18) für drei Wege umfasst, die jeweils mit dem Nehmerzylinder (5), mit dem abwärts gelegenen Ende (14) der Vorlaufleitung (4) und mit dem aufwärts gelegenen Ende (15) der Rücklaufleitung (10) verbunden sind.

3. Vorrichtung nach Anspruch 1 oder 2, **dadurch gekennzeichnet, dass** sie Rückschlag-Ventile (19, 20) umfasst, die in jeder Leitung (4, 10) die Strömung des Fluids von aufwärts nach abwärts gestatten und die Zirkulation des Fluids in der entgegen gesetzten Richtung verhindern.

4. Vorrichtung nach den Ansprüchen 2 und 3, **dadurch gekennzeichnet, dass** die Rückschlag-Ventile (19, 20) in den Leitungen (4, 10) montiert oder in das Dreiwege-Verbindungsstück (17, 18), in den Geberzylinder (2) und/oder in den Nehmerzylinder (5) integriert sind.

5. Vorrichtung nach Anspruch 1 oder 2, **dadurch gekennzeichnet, dass** sie eine Beschränkung (26), die in der Rücklaufleitung (10) den Durchfluss begrenzt und einen Druck-Abfall hervorruft, und ein Rückschlag-Ventil (19) umfasst, das in der Vorlaufleitung (4) die Strömung des Fluids von aufwärts nach abwärts gestattet und die Zirkulation des Fluids in der entgegen gesetzten Richtung verhindert.

6. Vorrichtung nach Anspruch 2, **dadurch gekennzeichnet, dass** das Dreiwege-Verbindungsstück (18) an einen höher gelegenen Teil des Nehmerzylinders (5) angeschlossen ist.

7. Vorrichtung nach Anspruch 2, **dadurch gekennzeichnet, dass** die Rücklaufleitung (10) an das Dreiwege-Verbindungsstück (18) an einem Punkt angeschlossen ist, der oberhalb des Anschlusspunktes (14) der Vorlaufleitung (4) an das Dreiwege-Verbindungsstück (18) liegt.

8. Vorrichtung nach Anspruch 2, **dadurch gekennzeichnet, dass** das Verbindungsstück (18) mit dem Nehmerzylinder (5) durch eine Verbindungsleitung (30) verbunden ist, wobei das aufwärts gelegene Ende (15) der Rücklaufleitung (10) unterhalb des Hochpunktes (21) der Verbindungsleitung (30) liegt, wobei das Fluid-Volumen zwischen dem besagten Hochpunkt (21) und dem besagten aufwärts gelegenen Ende (15) geringer als das Volumen des Geberzylinders (2), vorzugsweise geringer als die Hälfte des Volumens des Geberzylinders ist.

9. Vorrichtung nach einem der Ansprüche 1 bis 8, **dadurch gekennzeichnet, dass** die Vorlaufleitung (4) und die Rücklaufleitung (10) in einem Monoblock (25), zum Beispiel einem extrudierten Körper aus Kunststoff, ausgebildet sind.

10. Kraftfahrzeug, umfassend eine Kupplung, die von einer Vorrichtung zur hydraulischen Steuerung nach einem der Ansprüche 1 bis 9 betätigt wird.

## Claims

1. Hydraulic actuation device for a clutch comprising a master cylinder (2) controlled by a clutch pedal (3) and connected by a flow pipe (4) to a slave cylinder (5) for actuating the clutch, and means (6) for supplying the master cylinder (2) with hydraulic fluid, the actuation device including a return pipe (10) connecting the slave cylinder (5) to the master cylinder (2) and means (19, 20, 26) allowing circulation of fluid in the direction from the master cylinder (2) to the slave cylinder (5) in the flow pipe (4) and in the direction from the slave cylinder (5) to the master cylinder (2) in the return pipe (10), the said actuation device being **characterised in that** the upstream end (13) of the flow pipe (4) is connected to a lower part of a hydraulic chamber (27) connected to the master cylinder (2) and **in that** the downstream end (16) of the return pipe (10) is connected to an upper part of said hydraulic chamber (27).

2. Device according to claim 1, **characterised in that** it includes a three-way connector (18) connected to the slave cylinder (5), to the downstream end (14) of the flow pipe (4) and to the upstream end (15) of the return pipe (10), respectively.

3. Device according to claim 1 or 2, **characterised in that** it includes non-return valves (19, 20) allowing, in each pipe (4, 10), upstream to downstream flow of fluid and preventing the circulation of fluid in the opposite direction.

4. Device according to the combination of claims 2 and 3, **characterised in that** the non-return valves (19, 20) are mounted in the pipes (4, 10) or are incorporated into the three-way connector (17, 18), the master-cylinder (2) and/or the slave cylinder (5).

5. Device according to claim 1 or 2, **characterised in that** it includes a restrictor (26) limiting the flow and generating a pressure drop in the return pipe (10) and a non-return valve (19) allowing upstream to downstream passage of fluid in the flow pipe (4) and preventing the circulation of fluid in the opposite direction (10).

6. Device according to claim 2, **characterised in that** the three-way connector (18) is connected to an upper part of the slave cylinder (5).

7. Device according to claim 2, **characterised in that** the return pipe (10) is connected to the three-way connector (18) at a point located above the point of connection (14) of the flow pipe (4) to the three-way connector (18).

8. Device according to claim 2, **characterised in that** the connector (18) is connected to the slave cylinder (5) by a connection pipe (30), the upstream end (15) of the return pipe (10) being located below the high point (21) of the connection pipe (30), the volume of fluid between said high point (21) and said upstream end (15) being less than the volume of the master cylinder (2), preferably less than half the volume of the master cylinder.

9. Device according to any one of claims 1 to 8, **characterised in that** the flow pipe (4) and the return pipe (10) are formed in a single block body (25), for example an extruded body made of plastic material.

10. Motor vehicle including a clutch actuated by a hydraulic actuation device according to any one of claims 1 to 9.
